# EUROPÄISCHE PATENTSCHRIFT

(11) **EP 3 092 464 B1**
(45) Veröffentlichungstag und Bekanntmachung des Hinweises auf die Patenterteilung: **22.07.2020**
(21) Anmeldenummer: 14824485.8
(22) Anmeldetag: 24.12.2014
(51) Int. Cl.: G01F 11/42, A47J 42/50, A47J 31/42, G01F 11/28

(54) **MAHLWERK UND KAFFEEZUBEREITUNGSAUTOMAT ZUR DOSIERUNG VON MAHLGUT**
GRINDER AND AUTOMATIC COFFEE MACHINE FOR METERING GROUND PRODUCTS
MOULIN ET MACHINE A CAFE AUTOMATIQUE POUR LE DOSAGE DE PRODUITS BROYES

(30) Priorität: 08.01.2014 CH 11142014
(43) Veröffentlichungstag der Anmeldung: 16.11.2016
(73) Patentinhaber: Marco Tschümperlin, 6005 Luzern (CH)
(72) Erfinder: TSCHÜMPERLIN, Marco, CH-6005 Luzern (CH); TROXLER, Beat, CH-6026 Rain (CH)
(74) Vertreter: TSWpat Luzern AG
(86) Internationale Anmeldenummer: PCT/EP2014/079299
(87) Internationale Veröffentlichungsnummer: WO 2015/104192

(56) Entgegenhaltungen:
- EP-A1- 2 664 260
- WO-A2-2010/001428
- US-A- 2 104 332

## Beschreibung

Die vorliegende Erfindung betrifft ein Mahlwerk und einen Kaffeezubereitungsautomaten.

Im Stand der Technik sind Dosiervorrichtungen bekannt, welche ein gewünschtes, vorbestimmtes Dosiervolumen abgeben. Hierzu wird das gewünschte, vorbestimmte Dosiervolumen durch Manipulation an der Dosiervorrichtung eingestellt. Üblicherweise ist das zu dosierende Produkt in einem Vorratsbehälter bevorratet, welchem die Dosiervorrichtung nachgeordnet ist. Um die Dosierung vorzunehmen, wird ein Eingabeanschluss der Dosiervorrichtung geöffnet, wodurch eine Verbindung zwischen dem Vorratsbehälter und der Dosiervorrichtung freigegeben wird. Beispielsweise mittels Schwerkraft wird ein Anteil des Produktes aus dem Vorratsbehälter an die Dosiervorrichtung abgegeben. Die Dosiervorrichtung selber führt die Dosierung auf vielfältig bekannte Arten durch.

Dokument EP 2 664 260 A1 offenbart eine Dosiervorrichtung, bei welcher eine Dosierung von Kaffeebohnen über eine Dosierkammer erfolgt, deren Volumen veränderbar ist.

Beispielsweise lehrt die US 2 104 332, dass zur Dosierung auf ein Behältnis mit einem festgelegten Volumen zurückgegriffen wird. Dieses Behältnis ist einseitig geöffnet, wobei diese Öffnung einerseits, in einem ersten Zustand, einem mit dem Vorratsbehälter verbundenen Eingabeanschluss zugewendet werden kann, und andererseits, in einem zweiten Zustand, durch ein Schwenken einem Ausgabeanschluss zugewendet werden kann.

Im ersten Zustand wird das Behältnis bis zu seinem maximalen Aufnahmevolumen mit dem Produkt befüllt. Hierzu strömt bzw. fällt das Produkt mittels Schwerkraft in das Behältnis. Sobald das Behältnis maximal befüllt ist, wird es geschwenkt, bis die Öffnung dem Ausgabeanschluss zugewandt ist. Hierbei ist der Eingabeanschluss nunmehr verschlossen. Ebenfalls mittels Schwerkraft strömt bzw. fällt das Produkt dann in eine Weiterbehandlungseinrichtung, in eine Verpackung, etc. Das Volumen des abgegebenen Produktes entspricht somit dem maximalen Volumen von dem Behältnis.

Nachteilig hieran ist, dass dieses durch ein einmaliges Schwenken von dem Behältnis abgegebene Volumen oftmals nur einem Bruchteil des gewünschten, vorbestimmten Dosiervolumens entspricht. Daher muss zuvor mühsam berechnet werden, wie häufig der zuvor beschriebene Vorgang (Schwenken) wiederholt werden muss, bis das gewünschte, vorbestimmte Dosiervolumen erreicht ist. Erschwerend kommt hinzu, dass, falls das gewünschte, vorbestimmte Dosiervolumen nicht einem ganzzahligen Vielfachen der durch Schwenken von dem Behältnis einzeln abgegebenen Volumina entspricht, die Dosierung des gewünschten, vorbestimmten Dosiervolumens nicht exakt erfolgen kann.

Die Aufgabe der vorliegenden Erfindung besteht darin, ein Mahlwerk mit einer Dosiervorrichtung zur Dosierung von Mahlgut bereitzustellen, welches schnell und einfach zu bedienen ist, einfach aufgebaut ist und dauerhaft zuverlässig ein gewünschtes Dosiervolumen abgibt.

Diese Aufgabe wird gelöst durch ein Mahlwerk, umfassend eine Dosiervorrichtung zur Dosierung von Mahlgut gemäss Anspruch 1. Vorteilhafte Ausgestaltungen sind in den abhängigen Ansprüchen angegeben.

Erfindungsgemäss umfasst ein Mahlwerk eine Dosiervorrichtung zur Dosierung von Mahlgut. Die Dosiervorrichtung umfasst einen Vorratsbehälter mit einer Einfüllöffnung und einer Auslassöffnung; eine Öffnungs-/Schliesseinrichtung, welche an einem Bereich der Auslassöffnung des Vorratsbehälters angeordnet ist, mit einem Schliesskörper, welcher eine Rotationsachse hat, welche quer zu einer durch die Öffnungs-/Schliesseinrichtung durchlaufenden Auslassrichtung drehbar angeordnet ist; und einen Ausgabestutzen mit einer Auslassöffnung, wobei der Ausgabestutzen durch einen Hohlkörper gebildet ist und derart mit der Öffnungs-/Schliesseinrichtung in Eingriff steht, dass der Ausgabestutzen und die Öffnungs-/Schliesseinrichtung in Relation zueinander teleskopartig verstellbar sind. Das Mahlwerk umfasst ferner eine der Auslassöffnung von dem Ausgabestutzen unter Berücksichtigung der Schwerkraft nachgeordnete Mahlgut-Zerkleinerungseinrichtung, die so angeordnet ist, dass durch einen Betriebszustand der Mahlgut-Zerkleinerungseinrichtung die Auslassöffnung verschlossen bzw. geöffnet ist.

Ein derartiges Mahlwerk ist schnell und einfach zu bedienen. Zum Einstellen des gewünschten Dosiervolumens müssen lediglich die Öffnungs-/Schliesseinrichtung und der Ausgabestutzen in Relation zueinander verstellt werden. Das aufgezeigte Mahlwerk ist zudem einfach in der Herstellung, da es eine geringe Anzahl von Bauelementen umfasst. Hierdurch ist das Mahlwerk ebenfalls kostengünstig gehalten. Das aufgezeigte Mahlwerk ist ebenso dauerhaft zuverlässig in der präzisen Abgabe von einem gewünschten, vorbestimmten Dosiervolumen. Es zeigt sich hierbei als besonders vorteilhaft, dass unterschiedlich fein einstellbare Dosiervolumina in einem weiten Einstellbereich erhältlich sind.

Bei einem Einsatz des Mahlwerks, beispielsweise ein Mahlwerk von einem Kaffeezubereitungsautomaten, werden beim Wunsch nach einer präzisen Abgabe eines minimal erhältlichen Dosiervolumens, die Öffnungs-/Schliesseinrichtung und der Ausgabestutzen, welche teleskopartig angeordnet sind, derart verstellt, dass sie sich in Relation zueinander unterschiedlich erstrecken. Ein wesentlicher Vorteil besteht darin, dass die Kaffeebohnen in Abhängigkeit von ihrem Volumen und nicht in Abhängigkeit von der Dauer des Mahlens, bzw. der Zerkleinerung, wie im Stand der Technik üblich, dosiert werden. Hierdurch ist die erhaltene Menge von Kaffeepulver unabhängig vom Mahlgrad.

Vorzugsweise umfasst die Öffnungs-/Schliesseinrichtung einen Abschnitt, welcher zur teleskopartigen Verstellbarkeit mit dem Ausgabestutzen über eine vorzugsweise lösbare Verbindungseinrichtung teleskopartig verstellbar in Eingriff steht, wobei der Abschnitt durch einen Hohlkörper, vorzugsweise einen zylindrischen Hohlkörper gebildet ist. Die Öffnungs-/Schliesseinrichtung umfasst im Wesentlichen einen Abschnitt, welcher mit dem Bereich der Auslassöffnung des Vorratsbehälters verbunden ist, den Schliesskörper, welcher einen Pfad durch die Öffnungs-/Schliesseinrichtung öffnet oder verschliesst, und den Abschnitt, welcher mit dem Ausgabestutzen teleskopartig verstellbar in Eingriff steht. Die Öffnungs-/Schliesseinrichtung ist dazu angeordnet, den Zufuhrpfad von dem Vorratsbehälter in den Innenraum, welcher gemeinsam durch die Öffnungs-/Schliesseinrichtung und den Ausgabestutzen gebildet wird, zu öffnen oder zu verschliessen. Hierdurch kann das Mahlgut mit einem entsprechenden Volumen zuverlässig dosiert und abgegeben werden, ohne dass fehlerhafterweise weiteres Mahlgut oder Produktanteile, beispielsweise direkt aus dem Vorratsbehälter, von der Umgebung des Eingabeanschlusses, etc., nachrücken werden. Diese Ansteuerung der Öffnungs-/Schliesseinrichtung ist besonders einfach durchführbar und zuverlässig. Hierdurch können mehrere Dosiervolumina innerhalb von nur kurzen Zeitabständen zuverlässig abgegeben werden.

Vorzugsweise weist die Verbindungseinrichtung der Dosiervorrichtung zumindest einen Hohlkörper auf, welcher abschnittsweise zwischen der Öffnungs-/Schliesseinrichtung und dem Ausgabestutzen angeordnet ist. Dabei ist der Hohlkörper in Relation zu der Öffnungs-/Schliesseinrichtung und dem Ausgabestutzen teleskopartig verstellbar. Durch die Zwischenordnung von zumindest einem zusätzlichen Hohlkörper kann der Raum zum Aufnehmen und Dosieren des Mahlguts vergrössert werden. Denkbar ist auch die Anordnung einer Mehrzahl derartiger zusätzlicher Hohlkörper, welche teleskopartig ineinandergeschoben angeordnet sein können.

Damit wird eine zu dosierende Menge des Mahlguts durch den Raum innerhalb der Öffnungs-/Schliesseinrichtung und des Ausgabestutzens definiert, welcher zwischen dem Schliesskörper und der Auslassöffnung von dem Ausgabestutzen gebildet ist. Die Öffnungs-/Schliesseinrichtung ist derart ansteuerbar, dass sie zur Dosierung des Mahlguts den Zufuhrpfad öffnet, und zur Abgabe des dosierten Volumens des Mahlguts den Zufuhrpfad verschliesst. Hierdurch wird das Mahlgut schnell und zuverlässig dosiert und wird das dosierte Mahlgut zuverlässig abgegeben. Die Dosierkammer, welche das vorbestimmte Dosiervolumen einnimmt, wird zur Dosierung des Mahlguts einseitig geöffnet. Diese Öffnung dient lediglich zum Befüllen der Dosierkammer. Die Ansteuerung der Öffnungs-/Schliesseinrichtung ist besonders einfach durchführbar und zuverlässig. Hierdurch können mehrere Volumina hintereinander innerhalb von nur kurzen Zeitabständen zuverlässig dosiert werden.

Beispielsweise sind der Ausgabestutzen und ein Abschnitt von der Öffnungs-/Schliesseinrichtung zylinderförmig gebildet. Hierdurch wird erreicht, dass die Öffnungs-/Schliesseinrichtung und der Ausgabestutzen zueinander besonders passgenau ausgerichtet werden können.

Durch die Verbindungseinrichtung, welche angeordnet ist, zumindest die Öffnungs-/Schliesseinrichtung und den Ausgabestutzen in Relation zueinander lösbar zu verbinden, wird erreicht, dass die Hohlkörper in ihrer Erstreckung zueinander auf eine vorbestimmte Position eingestellt werden können und auf dieser Position verbleiben werden.

Beispielsweise ist die Verbindungseinrichtung dazu angeordnet, eine Kraftschlussverbindung zwischen wenigstens der Öffnungs-/Schliesseinrichtung und dem Ausgabestutzen in Relation zueinander anzulegen. Zusätzlich können wenigstens die Öffnungs-/Schliesseinrichtung und der Ausgabestutzen zueinander formschlüssig verbunden sein. Durch die Kraftschlussverbindung werden die Öffnungs-/Schliesseinrichtung und der Ausgabestutzen durch Anlegen einer Kraft in Relation zueinander in Verschieberichtung auf die vorbestimmte Position eingestellt, wobei diese Kraft ausreichend ist, um eine Reibkraft zwischen der Öffnungs-/Schliesseinrichtung und dem Ausgabestutzen zu überwinden. Nach dem Einstellen der Öffnungs-/Schliesseinrichtung und des Ausgabestutzens in Relation zueinander auf die vorbestimmte Position verbleiben sie durch den Kraftschluss (Reibschluss) an dieser Position. Die zuvor erwähnte Formschlussverbindung zwischen der Öffnungs-/Schliesseinrichtung und dem Ausgabestutzen in Relation zueinander kann beispielsweise in Drehrichtung eingerichtet sein. Mit anderen Worten, sind die Öffnungs-/Schliesseinrichtung und der Ausgabestutzen miteinander drehstarr verbunden und können somit lediglich in vertikaler Richtung zueinander verschoben werden.

Vorzugsweise umfasst die Verbindungseinrichtung ein elastisches Reibelement, welches zwischen wenigstens der Öffnungs-/Schliesseinrichtung und dem Ausgabestutzen angeordnet ist. Hierdurch ist eine besonders einfache und zuverlässige Kraftschlussverbindung geschaffen.

Vorzugsweise umfasst die Verbindungseinrichtung wenigstens einen Vorsprung, welcher im Wesentlichen federbelastet und/oder elastisch ist und an wenigstens der Öffnungs-/Schliesseinrichtung oder dem Ausgabestutzen angeordnet ist, und eine Mehrzahl von korrespondierenden Aussparungen, welche an dem anderen von wenigstens der Öffnungs-/Schliesseinrichtung und dem Ausgabestutzen angeordnet sind. Hierdurch ist eine sog. Einschnapp-Verbindung geschaffen, welche sich besonders vorteilhaft darin zeigt, dass die Öffnungs-/Schliesseinrichtung und der Ausgabestutzen auf diskrete Positionen zueinander eingestellt werden können und durch das Einschnappen des Vorsprungs in die jeweilige Aussparung zuverlässig an Ort und Stelle verbleiben. Durch dieses Merkmal können besonders schnell diskrete Volumina von Kaffeebohnen grob dosiert werden, beispielsweise ein erstes Dosiervolumen zum Zubereiten von einer Tasse Kaffee und ein zweites, grösseres Dosiervolumen zum gleichzeitigen Zubereiten von zwei Tassen Kaffee. Zusätzlich kann, ausgehend vom jeweils diskret (grob) eingestellten Dosiervolumen in Abhängigkeit von der gewählten Portionierungsmenge, eine Feinjustierung vorgenommen werden, bei welcher das Dosiervolumen im Wesentlichen stufenlos eingestellt wird. Hierzu bietet sich eine Feinjustierung mittels einer Gewindeverbindung an.

Vorzugsweise umfasst die Aussparung eine Rille, welche im Wesentlichen umlaufend am Innenumfang oder Aussenumfang von wenigstens der Öffnungs-/Schliesseinrichtung oder dem Ausgabestutzen ausgebildet ist. Hierdurch ist eine zuverlässige Einschnapp-Verbindung geschaffen.

Beispielsweise ist die Öffnungs-/Schliesseinrichtung allein durch Schwerkraft im Ausgabestutzen gelagert. Hierdurch kann die Öffnungs-/Schliesseinrichtung einschliesslich des hiermit verbundenen Vorratsbehälters insgesamt schnell und einfach ausgetauscht werden. Durch diesen Austausch kann insgesamt die jeweils im Vorratsbehälter der Dosiervorrichtung bevorratete Bohnensorte ausgetauscht werden. Mit anderen Worten, kann auf die jeweils gewünschte Bohnensorte zurückgegriffen werden, indem die jeweils hiermit bevorratete Öffnungs-/Schliesseinrichtung (Vorratsbehälter) in den Ausgabestutzen gesteckt wird.

Vorzugsweise umfasst die Verbindungseinrichtung eine Gewindeverbindung, über welche wenigstens die Öffnungs-/Schliesseinrichtung und der Ausgabestutzen zumindest abschnittsweise miteinander in Eingriff stehen. Hierdurch ist eine besonders einfach und zuverlässig verstellbare Anordnung von der Öffnungs-/Schliesseinrichtung und dem Ausgabestutzen in Relation zueinander gewährleistet. Zudem lässt sich diese Anordnung besonders kostengünstig herstellen.

Dabei sind vorzugsweise der Aussenumfang und/oder der Innenumfang von wenigstens der Öffnungs-/Schliesseinrichtung und dem Ausgabestutzen wenigstens abschnittsweise mit einem Aussengewinde und/oder einem Innengewinde bereitgestellt. Bei dieser Anordnung ist beispielsweise der Ausgabestutzen an seinem Innenumfang mit einem Innengewinde bereitgestellt. Die Öffnungs-/Schliesseinrichtung ist abschnittsweise am Aussenumfang mit einem Aussengewinde bereitgestellt. Diese beiden Gewinde stehen in Relation zueinander drehbar in Eingriff. Wie allgemein bekannt, ändert sich die Gesamtlänge dieser Anordnung in Relation zur Umdrehung zueinander. Es können weitere Hohlkörper zwischengesetzt werden, welche bei entsprechender Ausbildung von Innengewinde und Aussengewinde miteinander verschraubt werden können. Selbstverständlich korrespondieren die Steigung, bzw. der Steigungswinkel, der Gewinde miteinander. Durch entsprechende Auswahl der Steigung, bzw. des Steigungswinkels, der Gewinde kann die Genauigkeit bestimmt werden, mit welcher das Dosiervolumen einstellbar ist. Mit abnehmender Steigung der Gewinde steigt diese Genauigkeit an, da sich die Gesamterstreckung der verschraubten Hohlkörper pro Umdrehung nur geringfügig (fein) ändert. Hingegen steigt die Zeit zum Einstellen des Dosiervolumens an, da mehrere Umdrehungen notwendig sind, um die Öffnungs-/Schliesseinrichtung und den Ausgabestutzen in Relation zueinander zu verstellen.

Vorzugsweise ist die Öffnungs-/Schliesseinrichtung mit einem elektrisch ansteuerbaren Antrieb ausgestattet. Diese Ausgestaltung gestattet eine Einstellung des Dosiervolumens elektrisch angesteuert durch einen Antrieb, beispielsweise ein Schrittmotor.

Beispielsweise ist die Verbindungseinrichtung dazu angeordnet, eine Formschlussverbindung zwischen wenigstens der Öffnungs-/Schliesseinrichtung und dem Ausgabestutzen in Relation zueinander anzulegen. In dieser Ausgestaltung werden die Öffnungs-/Schliesseinrichtung und der Ausgabestutzen nach einem Verstellen auf eine vorbestimmte Position miteinander formschlüssig in Eingriff gebracht.

Vorzugsweise weist die Verbindungseinrichtung eine Nut/Feder-Verbindung auf, über welche wenigstens die Öffnungs-/Schliesseinrichtung und der Ausgabestutzen zumindest abschnittsweise miteinander in Eingriff stehen.

Weiter vorzugsweise umfasst die Nut/Feder-Verbindung zumindest eine Feder, welche an wenigstens der Öffnungs-/Schliesseinrichtung oder dem Ausgabestutzen gebildet ist, und eine Mehrzahl von korrespondierenden Nuten, welche an dem anderen von wenigstens der Öffnungs-/Schliesseinrichtung und dem Ausgabestutzen gebildet sind.

Weiter vorzugsweise verlaufen die Nuten im Wesentlichen entlang der Verschieberichtung von der Öffnungs-/Schliesseinrichtung und dem Ausgabestutzen und münden auf unterschiedlichen Höhen in Formschluss-Arretierungen. Diese Anordnung gestattet ein besonders rasches Einstellen auf vorbestimmte, diskrete Positionen.

Dabei sind die Formschluss-Arretierungen vorzugsweise als Nuten ausgebildet, welche im Wesentlichen senkrecht zur Verschieberichtung von der Öffnungs-/Schliesseinrichtung und dem Ausgabestutzen verlaufen. Auf diese Art und Weise werden die Öffnungs-/Schliesseinrichtung und der Ausgabestutzen durch die Nut/Feder-Verbindung sehr rasch in Längsrichtung zueinander verschoben und anschliessend gedreht, damit die jeweilige Feder in die senkrecht zur Verschieberichtung ausgerichtete Nut einfahren kann. Somit sind diese Elemente in Längsrichtung zueinander formschlüssig verbunden. Es können mehrere Nut-Pfade eingebracht werden, welche auf unterschiedlichen Höhen in die senkrecht zur Verschieberichtung verlaufenden Nuten münden. Diese Mehrzahl von in Längsrichtung verlaufenden Nut-Pfaden können bei einem gleichmässigen Winkelabstand voneinander beabstandet angeordnet sein.

Beispielsweise umfasst die Dosiervorrichtung eine Mehrzahl von Verbindungseinrichtungen, welche angeordnet sind, die Öffnungs-/Schliesseinrichtung, den Ausgabestutzen und wenigstens einen zwischengeordneten Hohlkörper in Relation zueinander lösbar zu verbinden. Somit können die zuvor aufgeführten Verbindungseinrichtungen einfach kombiniert werden.

Beispielsweise sind die Verbindungseinrichtungen angeordnet, wenigstens eine Kraftschlussverbindung und/oder eine Formschlussverbindung zwischen der Öffnungs-/Schliesseinrichtung, dem Ausgabestutzen und dem wenigstens einen zwischengeordneten Hohlkörper anzulegen.

Beispielsweise umfasst wenigstens eine der Verbindungseinrichtungen eine Gewindeverbindung und umfasst wenigstens eine weitere der Verbindungseinrichtungen eine Nut/Feder-Verbindung. Somit können die Öffnungs-/Schliesseinrichtung und der Ausgabestutzen mittels der Nut/Feder-Verbindung besonders schnell auf eine jeweilige (grobe) Position der Mehrzahl von diskreten Positionen eingestellt werden. Somit ist eine Dosiervorrichtung geschaffen, bei welcher das gewünschte Dosiervolumen sowohl schnell als auch präzise eingestellt werden kann.

Beispielsweise ist eine der Mehrzahl von Verbindungseinrichtungen angeordnet zum Verstellen der Öffnungs-/Schliesseinrichtung und des Ausgabestutzens in Relation zueinander in diskreten Stufen, und ist eine weitere der Mehrzahl von Verbindungseinrichtungen angeordnet zum stufenlosen Verstellen der Öffnungs-/Schliesseinrichtung und des Ausgabestutzens in Relation zueinander. Durch diesen Aufbau kann die jeweilige Position der Öffnungs-/Schliesseinrichtung in Relation zum Ausgabestutzen durch eine Grobeinstellung und eine nachfolgende Feineinstellung eingestellt, bzw. verschoben werden. Hierdurch wird Zeit zum Einstellen eingespart. Durch die grobe Positionierung kann beispielsweise die Anzahl von gleichzeitig abzugebenden Portionierungen (z.B. eine oder zwei Tassen Kaffee) vorbestimmt werden. An dieser Position angelangt, können dann die Öffnungs-/Schliesseinrichtung und der Ausgabestutzen durch Verdrehen in Relation zueinander besonders fein, bzw. stufenlos, eingestellt werden. Durch die feine, stufenlose Positionierung können Anpassungen an die Eigenschaften der Kaffeebohnen und an die individuellen Anforderungen an den Kaffee vorgenommen werden.

Beispielsweise ist der Schliesskörper manuell bedienbar und/oder elektrisch durch einen Antrieb ansteuerbar. Hierdurch wird das Mahlgut schnell und zuverlässig in die Dosierkammer gefüllt. Die Öffnungs-/Schliesseinrichtung und der Ausgabestutzen sind derart ausgerichtet, dass die Dosierkammer mittels Schwerkraft mit dem Mahlgut befüllbar ist und/oder das dosierte Mahlgut mittels Schwerkraft aus der Dosierkammer heraus abgebbar ist. Das dosierte Mahlgut wird an die Mahlgut-Zerkleinerungseinrichtung zugeführt. Der Vorratsbehälter, die Dosiervorrichtung und die Mahlgut-Zerkleinerungseinrichtung sind unter Berücksichtigung der Schwerkraft ausgerichtet bzw. angeordnet. Hierbei sollte der Vorratsbehälter, in herkömmlicher Betrachtung der Richtung von oben nach unten, oberhalb der Öffnungs-/Schliesseinrichtung der Dosiervorrichtung positioniert werden. Hierdurch kann das im Vorratsbehälter gespeicherte Mahlgut zur Dosierung bei geöffnetem Schliesskörper der Öffnungs-/Schliesseinrichtung lediglich mittels Schwerkraft in die auf das vorbestimmte Dosiervolumen eingestellte Dosierkammer fallen. Ferner ist die Mahlgut-Zerkleinerungseinrichtung wiederum unterhalb des Ausgabestutzens angeordnet. Hierdurch wird das Mahlgut eines vorbestimmten Dosiervolumens lediglich mittels Schwerkraft an die Mahlgut-Zerkleinerungseinrichtung abgegeben. Somit kann auf einfache Art und Weise die Hinzufügung von weiteren Transportvorrichtungen zur Befüllung der Dosierkammer und/oder zur Abgabe des dosierten Mahlguts aus der Dosierkammer eingespart werden.

Die der Auslassöffnung von dem Ausgabestutzen nachgeordnete Mahlgut-Zerkleinerungseinrichtung kann, zusätzlich zur Weiterverarbeitung, gleichzeitig die Wirkung zum Öffnen bzw. Schliessen der Auslassöffnung übernehmen. Ein Vorteil besteht beispielsweise darin, dass keine separate Öffnungs-/Schliesseinrichtung, beispielsweise in Form eines manuell bedienbaren oder elektrisch ansteuerbaren Schiebers, notwendig ist. Hierdurch wird insgesamt Zeit eingespart und können Kosten reduziert werden. Ausserdem kann auf eventuell fehleranfällige Bauteile verzichtet werden. Somit wird ausserdem die Zuverlässigkeit der Dosiervorrichtung erhöht.

Beispielsweise kann die Mahlgut-Zerkleinerungseinrichtung als eine Zerkleinerungsvorrichtung ausgebildet sein, welche das Mahlgut, direkt nach der Dosierung, zerkleinert, beispielsweise mahlt. Somit kann das dosierte Mahlgut umgehend und ohne Zeitverlust weiterverarbeitet werden. Unter der Annahme, dass das Mahlgut Lebensmittel oder Genussmittel sind, beispielsweise Getreide, Kaffeebohnen, etc., werden diese Produkte vorteilhafterweise frisch und/oder mit einem vollständig erhaltenen Aroma weiterverarbeitet. Das nach der Weiterverarbeitung anliegende Mahlgut hat somit eine sehr hohe Qualität in Hinblick auf Frische und Aroma.

Vorzugsweise umfasst der Schliesskörper einen zylinderförmigen oder kugelförmigen Körper, welcher abschnittsweise ausgespart ist. Hierdurch ist ein Betätigungselement zum Öffnen bzw. Verschliessen der Öffnungs-/Schliesseinrichtung geschaffen, welches bei jeder Betätigung nicht oder nur geringfügig auf das Mahlgut in der Öffnungs-/Schliesseinrichtung einwirkt. Somit ist das Mahlgut keinen nachteiligen Krafteinflüssen, insbesondere Scherkräften beim Verschliessen, ausgesetzt. Hierdurch besteht ein Vorteil darin, dass das Mahlgut unbeschädigt dosiert werden kann.

Dabei ist der zylinderförmige oder kugelförmige Körper vorzugsweise derart abschnittsweise ausgespart, dass das Mahlgut im geöffneten Zustand des Schliesskörpers durch den ausgesparten Abschnitt überführbar ist und im geschlossenen Zustand des Schliesskörpers durch den nicht ausgesparten Abschnitt abgesperrt ist. Hierdurch kann Mahlgut eines beliebigen Zustands und/oder einer beliebigen Grösse zuverlässig überführt bzw. abgesperrt werden. Zum Öffnen und Schliessen der Dosiervorrichtung kann der Körper lediglich bei einer jeweils entgegengesetzten Umdrehung von im Wesentlichen 90°C geschwenkt werden. Neben den zuvor genannten Vorteilen, werden ebenfalls Kosten eingespart und erweist sich die Bedienung als besonders schnell und einfach.

Beispielsweise ist die Öffnungs-/Schliesseinrichtung angeordnet, lediglich bei geschlossenem Schliesskörper vom Ausgabestutzen getrennt zu werden.

Vorzugsweise umfasst die Dosiervorrichtung ferner eine Arretiervorrichtung, welche angeordnet ist, die Öffnungs-/Schliesseinrichtung bei geöffnetem Schliesskörper in Relation zum Ausgabestutzen zu arretieren. Hierdurch wird ein unbeabsichtigtes Nachströmen von Kaffeebohnen aus dem Vorratsbehälter verhindert.

Vorzugsweise umfasst die Dosiervorrichtung ferner einen Deckel zum Abschliessen der Einfüllöffnung von dem Vorratsbehälter. Hierdurch wird das im Vorratsbehälter bevorratete Mahlgut lange frisch gehalten. Zusätzlich kann das Aroma des Mahlguts lange bewahrt werden.

Beispielsweise ist die Auslassöffnung des Vorratsbehälters fest mit der Öffnungs-/Schliesseinrichtung verbunden. Beispielsweise können der Vorratsbehälter und die Öffnungs-/Schliesseinrichtung einstückig ausgebildet sein. Hierdurch bilden der Vorratsbehälter und die Öffnungs-/Schliesseinrichtung einen integrierten Dosierkörper, welcher problemlos durch andere Dosierkörper ausgetauscht werden kann, beispielsweise um auf eine andere Bohnensorte zurückzugreifen. Durch diesen ganz wesentlichen Vorteil wird vermieden, dass Kaffeebohnensorten vermischt werden, wie dies im Stand der Technik der Fall ist.

Ein solches Mahlwerk ist insbesondere vorteilhaft zum Zerkleinern von Kaffeebohnen einsetzbar, wobei die Kaffeebohnen durch die Dosiervorrichtung stets zuverlässig dosiert der Mahlgut-Zerkleinerungseinrichtung zugeführt werden. Im inoperativen Zustand der Mahlgut-Zerkleinerungseinrichtung wird das dosierte Mahlgut innerhalb der Dosierkammer gehalten. Im operativen Zustand der Mahlgut-Zerkleinerungseinrichtung wird das dosierte Mahlgut aus der Dosierkammer entnommen.

Beispielsweise ist die Mahlgut-Zerkleinerungseinrichtung angeordnet, sämtliches dosiertes Mahlgut zu zerkleinern. Hierdurch wird vorteilhafterweise sichergestellt, dass die Mahlgut-Zerkleinerungseinrichtung nach einer jeweiligen Operation auf die Kaffeebohnen (Zerkleinerung) entleert ist. Somit wird vermieden, dass Kaffeebohnen langandauernd in der Mahlgut-Zerkleinerungseinrichtung verbleiben werden, welches den Kaffeegeschmack eintrüben würde. Bei dem Mahlwerk gemäss der Erfindung werden stets frische Kaffeebohnen weiterverarbeitet.

Die zuvor genannte Aufgabe wird ebenfalls durch einen Kaffeezubereitungsautomaten gelöst, welcher ein Mahlwerk nach einem der Ansprüche 1 bis 14 umfasst. Kaffeezubereitungsautomaten werden sowohl im privaten Haushalt als auch in der Gastronomie im zunehmenden Ausmass zur Zubereitung von frischen Kaffeeprodukten verwendet. Hierzu werden die Kaffeezubereitungsautomaten mit frischen Kaffeebohnen bevorratet. Der Kaffeezubereitungsautomat gemäss der Erfindung erlaubt die direkte Weiterverarbeitung von Kaffeebohnen, deren Volumen jeweils zuverlässig durch das Mahlwerk dosiert ist. Die Einstellung des Dosiervolumens erfolgt beispielsweise in Abhängigkeit des gewünschten Kaffeeproduktes. Das Dosiervolumen kann ferner vom letztendlich abgegebenen Volumen des gewünschten Kaffeeproduktes abhängen.

Wünscht ein Bediener beispielsweise die Zubereitung von Espresso, so muss ein vergleichsweise geringes Volumen, bzw. eine geringe Menge von Kaffeebohnen dosiert werden. Hierzu werden die Öffnungs-/Schliesseinrichtung und der Ausgabestutzen von der Dosiervorrichtung, welche in Relation zueinander teleskopartig angeordnet sind, beispielsweise derart verstellt, dass sie im Wesentlichen auf eine vergleichsweise geringe Gesamterstreckung zusammengeschoben sind, sodass die hierdurch eingestellte Dosierkammer ein im Wesentlichen minimales Dosiervolumen einnimmt. Nach dieser entsprechend manuell oder elektrisch angesteuerten Einstellung des Dosiervolumens, erfolgt die zuvor genannte Dosierung. Im Gegensatz hierzu, falls der Bediener die Zubereitung eines Kaffeeproduktes mit einem maximalen Volumen und/oder mit einer maximalen Stärke wünscht, wird das Volumen der Dosierkammer auf ein vergleichsweise maximales Volumen eingestellt. Hierzu werden die Öffnungs-/Schliesseinrichtung und der Ausgabestutzen in Relation zueinander derart verstellt, dass die Anordnung eine vergleichsweise maximale Gesamterstreckung annimmt.

Es ist zu erwähnen, dass in den zuvor genannten Beispielen im Wesentlichen zwei Extrem-Einstellungen der Dosiervorrichtung von dem Kaffeezubereitungsautomaten beschrieben sind. Ein ganz wesentlicher Vorteil des Kaffeezubereitungsautomaten besteht jedoch darin, dass in dem weiten Bereich zwischen diesen zwei Extrem-Einstellungen eine grosse Auswahl unterschiedlicher Dosiervolumina einstellbar ist, welche beispielsweise einer ganzen Produktpalette von gewünschten Kaffeeprodukten zugeordnet werden kann, beispielsweise einfacher Espresso, doppelter Espresso, Kaffee-Creme, Cappuccino, Latte Macchiato, usw. Zusätzlich zu den zuvor genannten Beispielen, kann neben der Einstellung des Dosiervolumens in Abhängigkeit von einem gewünschten Kaffeeprodukt, auch eine Einstellung zur gleichzeitigen Abgabe von beispielsweise zwei oder mehr Kaffeeprodukten vorgenommen werden. Im einfachsten Beispiel wird hierzu das Dosiervolumen der Dosierkammer lediglich entsprechend verdoppelt, verdreifacht, usw.

Ein beispielhaftes Verfahren unter Anwendung eines Mahlwerks nach einem der Ansprüche 1 bis 14 kann die Schritte umfassen: Verschliessen des Schliesskörpers der Öffnungs-/Schliesseinrichtung; Einstellen eines vorbestimmten Dosiervolumens durch Verstellen von wenigstens der Öffnungs-/Schliesseinrichtung und dem Ausgabestutzen in Relation zueinander in Längsrichtung; Öffnen des Schliesskörpers der Öffnungs-/Schliesseinrichtung; Befüllen eines zwischen dem Schliesskörper und der Auslassöffnung des Ausgabestutzens definierten Raums mit dem Mahlgut; und Verschliessen des Schliesskörpers, sobald der Raum vollständig mit dem Mahlgut befüllt ist. Hierdurch ist ein Verfahren geschaffen, welches mit nur wenigen Schritten eine stets zuverlässig dosierte Abgabe von Kaffeebohnen ermöglicht. Das jeweils gewünschte Dosiervolumen kann dabei in einem weiten Bereich fein justiert eingestellt werden. Durch den einfach gehaltenen Ablauf des Verfahrens werden zudem Fehlbedienungen der Dosiervorrichtung auf ein Minimum reduziert.

Beispielsweise sind die Öffnungs-/Schliesseinrichtung und der Ausgabestutzen von der Dosiervorrichtung wenigstens abschnittsweise zylinderförmig und stehen über eine Gewindeverbindung miteinander in Eingriff, wobei der Schritt zum Einstellen des vorbestimmten Raums ein Umdrehen der Öffnungs-/Schliesseinrichtung und des Ausgabestutzens in Relation zueinander umfasst. Hierdurch kann die Dosiervorrichtung, beispielsweise einfach von Hand, durch ein Umdrehen von der Öffnungs-/Schliesseinrichtung und dem Ausgabestutzen in Relation zueinander solange verstellt werden, bis das eingestellte Dosiervolumen der Dosierkammer gleich dem gewünschten Dosiervolumen entspricht. Beispielsweise kann das Dosiervolumen durch ein Umdrehen von der Öffnungs-/Schliesseinrichtung und dem Ausgabestutzen in Relation zueinander im Uhrzeigersinn verringert werden und durch ein Umdrehen von der Öffnungs-/Schliesseinrichtung und dem Ausgabestutzen in Relation zueinander entgegen dem Uhrzeigersinn vergrössert werden.

Ausführungsbeispiele der vorliegenden Erfindung werden nachstehend anhand von Figuren noch näher erläutert.

Es zeigen:
Figuren 1a,b schematisch eine Schnittansicht von einer Dosiervorrichtung mit einer verschlossenen Öffnungs-/Schliesseinrichtung;
Figuren 2a,b schematisch eine Schnittansicht von der Dosiervorrichtung mit geöffneter Öffnungs-/Schliesseinrichtung;
Figuren 3a-e ein beispielhaftes Verfahren zur Dosierung von Produkten, wobei das Verfahren in mehreren Abläufen angezeigt ist; und
Figur 4 eine Schnittansicht von einem Ausführungsbeispiel der Dosiervorrichtung.

In Figur la ist schematisch eine Schnittansicht von einer Dosiervorrichtung 10 dargestellt. Die Dosiervorrichtung 10 umfasst einen Vorratsbehälter 12 mit einer Auslassöffnung 14. Ferner umfasst ist eine Öffnungs-/Schliesseinrichtung 16, welche am Bereich der Auslassöffnung 14 mit dem Vorratsbehälter 12 verbunden ist. Ein Abschnitt 18 von der Öffnungs-/Schliesseinrichtung 16 steht mit einem Ausgabestutzen 20 derart in Eingriff, dass die Öffnungs-/Schliesseinrichtung 16 und der Ausgabestutzen 20 in Relation zueinander teleskopartig verstellbar sind. Der Abschnitt 18 von der Öffnungs-/Schliesseinrichtung 16 ist als Hohlkörper gebildet. Obwohl nicht gezeigt, kann eine Mehrzahl von Hohlkörpern zwischen dem Abschnitt 18 von der Öffnungs-/Schliesseinrichtung 16 und dem Ausgabestutzen 20 vorgesehen sein. In dem in den Figuren dargestellten Beispiel sind der Abschnitt 18 von der Öffnungs-/Schliesseinrichtung 16 und der Ausgabestutzen 20 als zylindrische Hohlkörper ausgebildet. Ferner ist der Ausgabestutzen 20 an seinem Innenumfang mit einem Innengewinde 22 bereitgestellt und ist der Abschnitt 18 von der Öffnungs-/Schliesseinrichtung 16 an seinem Aussenumfang mit einem Aussengewinde 24 bereitgestellt.

Die jeweiligen Innen- und Aussendurchmesser von dem Abschnitt 18 von der Öffnungs-/Schliesseinrichtung 16 und von dem Ausgabestutzen 20 sind derart gewählt, dass die beiden über ihre Gewinde 22,24 schraubbar miteinander in Eingriff gebracht sind. Somit kann insgesamt die Erstreckung der teleskopartigen Anordnung aus der Öffnungs-/Schliesseinrichtung 16 und dem Ausgabestutzen 20 durch ein Umdrehen der beiden Elemente in Relation zueinander verändert werden.

Zusammengefasst sind die Öffnungs-/Schliesseinrichtung 16 und der Ausgabestutzen 20 über eine Verbindungseinrichtung miteinander verbunden, welche angeordnet ist, diese beiden Elemente in Relation zueinander verstellbar zu verbinden. In dem zuvor erläuterten Beispiel ist die Verbindungseinrichtung als eine Gewindeverbindung ausgeführt. Jedoch kann die Verbindungseinrichtung als eine weitere Kraftschlussverbindung zwischen der Öffnungs-/Schliesseinrichtung 16 und dem Ausgabestutzen 20 ausgeführt sein.

Beispielsweise kann die Verbindungseinrichtung ein elastisches Reibelement (nicht gezeigt) umfassen, welches zwischen dem Abschnitt 18 von der Öffnungs-/Schliesseinrichtung 16 und dem Ausgabestutzen 20 angeordnet ist. Durch Überwinden der Reibkraft, welche das Reibelement zwischen diesen beiden Elementen anlegt, können sie in Längsrichtung verstellt werden. Nach dem Verstellen verbleiben sie durch die Reibkraft an Ort und Stelle.

Alternativ kann die Verbindungseinrichtung eine sog. Einschnapp-Verbindung (nicht gezeigt) umfassen, welche wenigstens einen Vorsprung, welcher im Wesentlichen federbelastet und/oder elastisch ist und am Abschnitt 18 von der Öffnungs-/Schliesseinrichtung 16 oder am Ausgabestutzen 20 angeordnet ist, umfasst. Ferner umfasst die Einschnapp-Verbindung eine Mehrzahl von korrespondierenden Aussparungen, welche an einem anderen von dem Abschnitt 18 von der Öffnungs-/Schliesseinrichtung 16 und dem Ausgabestutzen 20 angeordnet sind. Die Aussparungen können als am Innenumfang oder Aussenumfang im Wesentlichen umlaufende Rillen ausgeführt sein, welche auf unterschiedlichen Höhen ausgeformt sind. Somit können die Öffnungs-/Schliesseinrichtung 16 und der Ausgabestutzen 20 in Relation zueinander schrittweise (diskret) verstellt werden.

Alternativ kann die Verbindungseinrichtung dazu angeordnet sein, eine Formschlussverbindung zwischen dem Abschnitt 18 von der Öffnungs-/Schliesseinrichtung 16 und dem Ausgabestutzen 20 in Relation zueinander anzulegen. In einem Beispiel hierzu kann die Verbindungseinrichtung eine Nut/Feder-Verbindung (nicht gezeigt) umfassen, über welche die Öffnungs-/Schliesseinrichtung 16 und der Ausgabestutzen 20 zumindest abschnittsweise miteinander in Eingriff stehen. Die Nut/Feder-Verbindung umfasst wenigstens eine Feder, welche am Abschnitt 18 von der Öffnungs-/Schliesseinrichtung 16 oder am Ausgabestutzen 20 angeordnet ist, und eine Mehrzahl von korrespondierenden Nuten, welche an einem anderen von dem Abschnitt 18 von der Öffnungs-/Schliesseinrichtung 16 und dem Ausgabestutzen 20 angeordnet ist. Hierbei verlaufen die Nuten im Wesentlichen entlang der Verschieberichtung von der Öffnungs-/Schliesseinrichtung 16 und dem Ausgabestutzen 20. Somit stehen die Öffnungs-/Schliesseinrichtung 16 und der Ausgabestutzen 20 in vertikaler Richtung zueinander in einer Kraftschlussverbindung und sind durch die Nut/Feder-Verbindung in Drehrichtung formschlüssig verbunden. Hierdurch sind die Öffnungs-/Schliesseinrichtung 16 und der Ausgabestutzen 20 in vertikaler Richtung frei verstellbar und zugleich drehstarr verbunden.

Die Nuten können ferner auf unterschiedlichen Höhen in Formschluss-Arretierungen münden. Die Formschluss-Arretierungen sind als Nuten ausgebildet, welche im Wesentlichen senkrecht zur Verschieberichtung der Öffnungs-/Schliesseinrichtung 16 und dem Ausgabestutzen 20 verlaufen. Durch ein Verschieben der Feder innerhalb von der korrespondierenden Nut in Längsrichtung und ein anschliessendes Verdrehen der Öffnungs-/Schliesseinrichtung 16 und des Ausgabestutzens 20 in Relation zueinander, gelangt die Feder in die senkrecht zur Verschieberichtung verlaufende Nut und wird somit in Längsrichtung arretiert. Durch die schrittweise, grobe Verstellung der Öffnungs-/Schliesseinrichtung 16 und des Ausgabestutzens 20 in Relation zueinander mittels der Nut/Feder-Verbindung können Basispositionen definiert werden, beispielsweise zur Dosierung von Kaffeebohnen zur Zubereitung von einem einfachen Espresso, doppelten Espresso, etc.

Ferner alternativ kann die Dosiervorrichtung eine Mehrzahl von Verbindungseinrichtungen umfassen, welche angeordnet sind, die Öffnungs-/Schliesseinrichtung 16, den Ausgabestutzen 20 und zumindest einen zwischengesetzten Hohlkörper in Relation zueinander lösbar zu verbinden. Somit können beispielsweise die zuvor aufgeführten Verbindungseinrichtungen kombiniert werden. In diesem Beispiel kann wenigstens eine Verbindungseinrichtung dazu angeordnet sein, eine Kraftschlussverbindung zwischen zumindest zwei der zuvor aufgezählten Elemente in Relation zueinander anzulegen, und/oder kann wenigstens eine weitere Verbindungseinrichtung dazu angeordnet sein, eine Formschlussverbindung zwischen zumindest zwei von diesen Elementen in Relation zueinander anzulegen.

Beispielsweise umfasst wenigstens eine der Verbindungseinrichtungen eine Gewindeverbindung und umfasst wenigstens eine weitere der Verbindungseinrichtungen eine Nut/Feder-Verbindung.

In diesem Beispiel können wenigstens zwei dieser Elemente mittels der Nut/Feder-Verbindung schrittweise und somit besonders schnell auf eine grobe Position der Mehrzahl von diskreten Positionen eingestellt werden. Ausgehend von dieser Position können dann ebenfalls wenigstens zwei dieser Elemente durch Verdrehen in Relation zueinander besonders fein auf die letztendlich gewünschte Position eingestellt werden. Durch diese Kombination der Verbindungseinrichtungen kann die jeweilige Position dieser Elemente durch eine vorgeschaltete Grobeinstellung und eine nachfolgende Feineinstellung eingestellt werden. Hierdurch wird viel Zeit zum Einstellen eingespart, ohne dass Abstriche bei der Präzision der Dosierung vorgenommen werden.

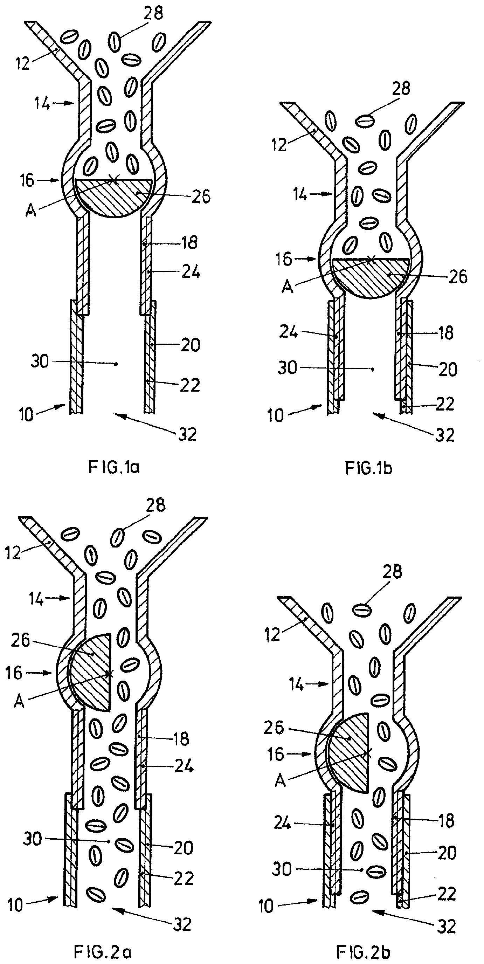

Wieder bezugnehmend auf Figur 1a, ist eine maximale Erstreckung der Anordnung aus der Öffnungs-/Schliesseinrichtung 16 und dem Ausgabestutzen 20 gezeigt, wobei sie zueinander im Wesentlichen minimal in ihrer Längsrichtung überlappt sind. Figur 1b zeigt hingegen einen Zustand, bei welchem die Öffnungs-/Schliesseinrichtung 16 und der Ausgabestutzen 20 derart in Relation zueinander angeordnet, bzw. umdreht sind, dass die teleskopartige Anordnung aus diesen beiden Elementen eine minimale Erstreckung aufweist. Mit anderen Worten, sind die beiden Elemente in dieser Position in Relation zueinander in Längsrichtung betrachtet im Wesentlichen maximal überlappt.

Die Öffnungs-/Schliesseinrichtung 16 umfasst ferner einen Schliesskörper 26, welcher quer zu einer durch die Öffnungs-/Schliesseinrichtung 16 durchlaufenden Auslassrichtung drehbar angeordnet ist. Der Schliesskörper 26 ist in dem gezeigten Beispiel als ein Walzenkörper ausgebildet. Der Walzenkörper ist in einer korrespondierenden Aussparung innerhalb der Öffnungs-/Schliesseinrichtung 16 um eine Achse A schwenkbar angeordnet. Der Walzenkörper ist abschnittsweise ausgespart. Die Achse A verläuft entlang einer Achsenrichtung senkrecht zur Figurenebene. In der in Figuren 1a,b gezeigten Anordnung des Schliesskörpers 26 innerhalb der Öffnungs-/Schliesseinrichtung 16 ist der Zulauf von Produkten 28 aus dem Vorratsbehälter 12 abgesperrt.

Figuren 2a,b zeigen die in Figuren 1a,b dargestellte Dosiervorrichtung 10, wobei die Öffnungs-/Schliesseinrichtung 16 geöffnet ist. Genauer gesagt, ist der Schliesskörper 26 in einen geöffneten Zustand geschwenkt. Analog zu den Figuren 1a,b ist die Dosiervorrichtung 10 bei maximaler Erstreckung der Öffnungs-/Schliesseinrichtung 16 und des Ausgabestutzens 20 in Relation zueinander (Figur 2a) und bei minimaler Erstreckung der Öffnungs-/Schliesseinrichtung 16 und des Ausgabestutzens 20 in Relation zueinander (Figur 2b) gezeigt. Wie in Figuren 2a,b schematisch angezeigt, kann somit das Produkt 28 durch den geöffneten Schliesskörper 26 mittels Schwerkraft einfach in einen Raum 30 fallen. Dieser Raum 30 ist innerhalb von sowohl der Öffnungs-/Schliesseinrichtung 16 als auch dem Ausgabestutzen 20 und zwischen dem Schliesskörper 26 und einer Auslassöffnung 32 von dem Ausgabestutzen 20 gebildet. In dieser Beschreibung wird dieser Raum 30 auch als Dosierkammer bezeichnet. Mit anderen Worten, ist durch den geöffneten Schliesskörper 26 ein Zufuhrpfad von dem Vorratsbehälter 12 in den Raum 30 geöffnet. Obwohl in den Figuren nicht gezeigt, kann das Produkt 28 durch Einwirkung von einer weiteren Kraft oder durch Druckbeaufschlagung in den Raum 30 überführt werden.

Zum Öffnen der Öffnungs-/Schliesseinrichtung 16 wird der Schliesskörper 26 lediglich um 90°C um seine Achse A geschwenkt, bzw. gedreht. Der Schliesskörper 26 kann hierbei manuell mittels einer starr mit der Achse A des Schliesskörpers 26 verbundenen Bedienvorrichtung, beispielsweise ein Hebel oder ein Dreh-Bedienrad (nicht gezeigt), geschwenkt werden. Alternativ oder zusätzlich kann der Schliesskörper 26 durch einen Antrieb (nicht gezeigt), beispielsweise ein Schrittmotor, geschwenkt werden, welcher durch einen Bediener oder eine Steuerung (nicht gezeigt) zum Öffnen angesteuert wird.

Obwohl in den Figuren nicht gezeigt, kann der Schliesskörper 26 auch durch einen kugelförmigen Körper mit einer Aussparung gebildet sein.

Wie schematisch dargestellt, kann das zu dosierende Produkt 28 als Kaffeebohnen ausgeführt sein, welche vor einer Weiterverarbeitung in einem Mahlwerk (nicht gezeigt) in geeigneter Weise, beispielsweise in Abhängigkeit von einem gewünschtem Kaffeeprodukt, einem Volumen des Kaffeeprodukts, etc., zu dosieren sind.

In den Figuren 2a und 2b ist vergleichend dargestellt, dass durch die Dosiervorrichtung 10 auf einfache Art und Weise eine unterschiedliche Menge von Kaffeebohnen dosiert werden kann. In dem in Figur 2a gezeigten Beispiel werden beispielsweise Kaffeebohnen dosiert, welche in einem späteren Ablauf zur Zubereitung von einem vergleichsweise grossvolumigen Latte Macchiato dosiert werden. In dem in Figur 2b gezeigten Beispiel werden Kaffeebohnen dosiert, welche in einem späteren Ablauf zur Zubereitung von einem vergleichsweise geringvolumigen Espresso dosiert werden.

Ein ganz wesentlicher Vorteil besteht darin, dass diese unterschiedlichen Dosierungen auf die in ihrem Ursprungszustand belassenen Kaffeebohnen direkt durchgeführt werden. Somit verbleibt das Aroma der Kaffeebohnen länger erhalten.

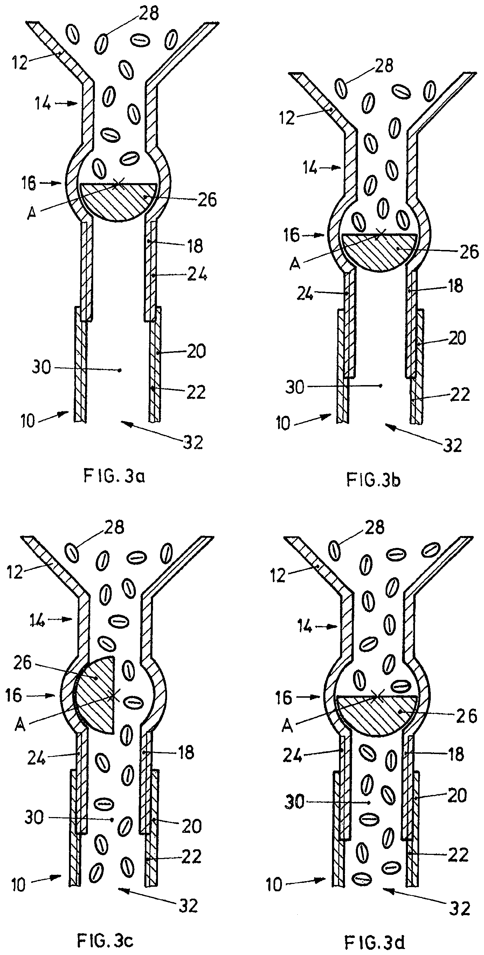

Figuren 3a bis 3e dienen zur Erläuterung der Abläufe eines Verfahrens zum Dosieren von Produkten 28 durch die Dosiervorrichtung 10.

Figur 3a zeigt einen Anfangszustand oder Ruhezustand der Dosiervorrichtung 10 an, bei welchem beispielsweise die Anordnung aus der Öffnungs-/Schliesseinrichtung 16 und dem Ausgabestutzen 20 maximal erstreckt ist. Alternativ kann die Dosiervorrichtung 10 im Anfangszustand oder Ruhezustand auch eine andere Position annehmen, beispielsweise eine unterste Position.

Figur 3b zeigt eine Position der Anordnung aus der Öffnungs-/Schliesseinrichtung 16 und dem Ausgabestutzen 20 an, nachdem die Dosiervorrichtung 10 auf ein vorbestimmtes Dosiervolumen eingestellt worden ist. Hierbei hat beispielsweise ein Bediener die Dosiervorrichtung 10 derart lange durch Umdrehen der Öffnungs-/Schliesseinrichtung 16 und des Ausgabestutzen 20 in Relation zueinander eingestellt, bis die Dosiervorrichtung 10 dazu eingestellt ist, eine genau dosierte Menge von Kaffeebohnen abzugeben, welche beispielsweise zur Zubereitung von einer Tasse Kaffee-Creme nötig bzw. gewünscht ist. Diese Einstellung (Umdrehung) kann beispielsweise auch durch einen (nicht gezeigten) Antrieb vorgenommen werden, welcher elektrisch mittels Tastenbedienung durch den Bediener oder durch eine automatische Steuerung angesteuert wird.

Figur 3c zeigt die Dosiervorrichtung 10 an, nachdem sie auf ein gewünschtes Dosiervolumen eingestellt ist und anschliessend die Öffnungs-/Schliesseinrichtung 16 geöffnet wird, indem der Schliesskörper 26 um 90° im Uhrzeigersinn geschwenkt wird. Nach dem Öffnen fallen die Kaffeebohnen 28 als das zu dosierende Produkt in den auf das entsprechende Dosiervolumen eingestellten Raum 30. Obwohl in der Zeichnung nicht gezeigt, kann die Auslassöffnung 32 des Ausgabestutzens 20 beispielsweise durch eine Mahlgut-Zerkleinerungseinrichtung verschlossen sein. Genauer gesagt, kann die Auslassöffnung 32 des Ausgabestutzens 20 durch einen Betriebszustand der Mahlgut-Zerkleinerungseinrichtung, beispielsweise ein inoperativer Zustand, verschlossen sein.

Wie in Figur 3d gezeigt, wird die Öffnungs-/Schliesseinrichtung 16 nach dem Befüllen des Raums 30 wieder verschlossen. Hierzu wird der Schliesskörper 26 von dem in Figur 3c gezeigten Zustand ausgehend lediglich um 90° entgegen dem Uhrzeigersinn geschwenkt. Indem der Schliesskörper 26 als ein Walzenkörper oder Kugelkörper mit Aussparungen ausgebildet ist, welcher quer zu einer durch die Öffnungs-/Schliesseinrichtung 16 durchlaufenden Auslassrichtung drehbar angeordnet ist, werden vorteilhafterweise keinerlei Scherkräfte auf die Kaffeebohnen 28 angelegt. Somit verbleiben die Kaffeebohnen 28 beim Öffnen und Schliessen des Schliesskörpers 26 in einem unveränderten Ausgangszustand.

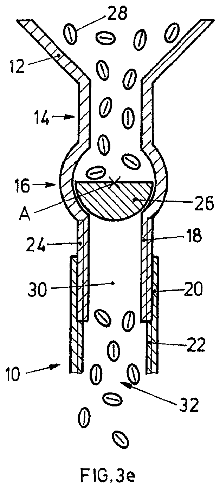

In Figur 3e ist ein Ablauf des Verfahrens gezeigt, bei welchem die dosierten Kaffeebohnen 28 an eine nicht gezeigte Mahlgut-Zerkleinerungseinrichtung abgegeben werden. Hierbei werden die Kaffeebohnen 28 mittels Schwerkraft aus dem Raum 30 direkt an die Mahlgut-Zerkleinerungseinrichtung überführt. Bezogen auf das zuvor genannte Beispiel, kann die Mahlgut-Zerkleinerungseinrichtung bei diesem Ablauf des Verfahrens in einen operativen Zustand versetzt werden. Aufgrund des in Schliessposition geschwenkten Schliesskörpers 26 können bei diesem Ablauf des Verfahrens keinerlei Kaffeebohnen 28 nachfolgen. Hierdurch ist gewährleistet, dass lediglich die gewünschte Menge an Kaffeebohnen 28, bzw. das gewünschte Dosiervolumen, abgegeben wird.

Nach dem vollständigen Entleeren des Raums 30 kann die Auslassöffnung 32 verschlossen werden (nicht gezeigt). Beispielsweise kann die Auslassöffnung 32 verschlossen werden, indem die nicht gezeigte Mahlgut-Zerkleinerungseinrichtung in einen inoperativen Zustand versetzt wird. In diesem Zustand ist die Dosiervorrichtung 10 zur weiteren Dosierung von Kaffeebohnen 28 oder weiteren Kaffeebohnen vorbereitet. Hierbei kann die Dosiervorrichtung 10 in der in Figur 3e gezeigten Anordnung verbleiben oder alternativ auf ihre Anfangsposition oder Ruheposition (siehe Figur 3a) zurückgeführt werden.

Wie zuvor beschrieben, kann die Auslassöffnung 32 des Ausgabestutzens 20 durch einen jeweiligen Betriebszustand einer nachgeordneten Mahlgut-Zerkleinerungseinrichtung eines Mahlwerks für Kaffeebohnen geöffnet bzw. geschlossen werden (nicht gezeigt). Eine solche Mahlgut-Zerkleinerungseinrichtung ist zum Umformen des Zustands der Kaffeebohnen 28 zu Kaffeepulver bekannt. Bei dieser geschilderten Ausgestaltung wirkt die Mahlgut-Zerkleinerungseinrichtung im inoperativen Zustand als verschliessend. Nach der erfolgten Dosierung (Befüllung des Raums 30) und dem Absperren des Schliesskörpers 26 kann die Mahlgut-Zerkleinerungseinrichtung direkt in den operativen Zustand versetzt werden, woraufhin die jeweils in Anlage mit der Mahlgut-Zerkleinerungseinrichtung befindlichen Kaffeebohnen 28 stückweise zu Kaffeepulver umgeformt werden. Dieses Kaffeepulver kann direkt zu einem Kaffeeprodukt gebrüht werden. Somit wird ein Kaffeeprodukt mit einem frischen Aroma erlangt. Alternativ kann bei dem Kaffeezubereitungsautomaten das Kaffeepulver zur späteren Weiterbehandlung stromabwärts der Dosiervorrichtung 10 bevorratet werden. Bei dem Ablauf zum Mahlen der Kaffeebohnen 28 rücken sämtliche Kaffeebohnen 28 innerhalb des Raums 30 stückweise durch Schwerkraft nach, bis sämtliche Kaffeebohnen 28 zu Kaffeepulver umgewandelt sind. Bei dieser besonders bevorzugten Ausgestaltung werden somit die vorab dosierten Kaffeebohnen 28 ohne Zwischenschaltung eines weiteren Bauteils (Öffnungs-/Schliesseinrichtung) direkt durch die Mahlgut-Zerkleinerungseinrichtung zu Kaffeepulver umgewandelt.

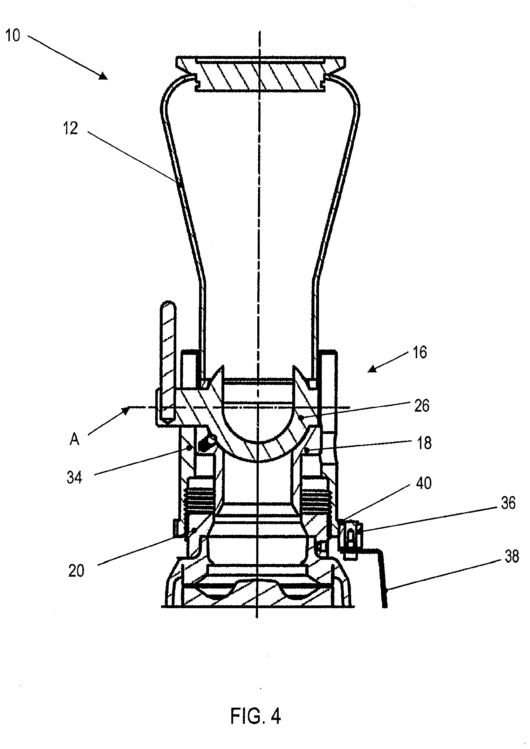

Figur 4 zeigt ein Ausführungsbeispiel der Dosiervorrichtung 10 in einer Längsschnittansicht. In dieser Ansicht ist die Dosiervorrichtung 10 in einer Ebene entlang der Drehachse zum Verdrehen der Öffnungs-/Schliesseinrichtung 16 und des Ausgabestutzens 20 in Relation zueinander und in einer Ebene entlang der Achse A zum Schwenken des Schliesskörpers 26 geschnitten. In diesem Ausführungsbeispiel sind die Öffnungs-/Schliesseinrichtung 16 und der Ausgabestutzen 20 über ein zylinderförmiges Adapterelement 34 miteinander verstellbar verbunden.

Das Adapterelement 34 ist hierbei an seinem unteren Abschnitt mit einem Innengewinde versehen, welches mit einem Aussengewinde des Ausgabestutzens 20 verschraubt ist. Das Adapterelement 34 ist wiederum kraftschlüssig und/oder formschlüssig mit der Öffnungs-/Schliesseinrichtung 16 verbunden. Die Öffnungs-/Schliesseinrichtung 16 ist hierzu beispielsweise formschlüssig und im Wesentlichen passgenau in die zylinderförmige Öffnung des Adapterelements 34 eingesetzt. Das Adapterelement 34 umfasst vertikal ausgerichtete Führungen bzw. Nuten oder Langlöcher (nicht gezeigt), in welche Vorsprünge bzw. Federn (nicht gezeigt) der Öffnungs-/Schliesseinrichtung 16 eingeführt sind und somit vertikal führbar sind. Hierdurch können die Öffnungs-/Schliesseinrichtung 16 und das Adapterelement 34 in Relation zueinander vertikal verstellt werden. Zwischen der Öffnungs-/Schliesseinrichtung 16 und dem Adapterelement 34 kann eine Kraftschlussverbindung eingerichtet sein, so dass die Position derer nach dem vertikalen Verstellen unverändert verbleibt. Hierzu kann beispielsweise ein Reibelement vorgesehen sein. Alternativ oder zusätzlich können die Öffnungs-/Schliesseinrichtung 16 und das Adapterelement 34 durch eine zwischengesetzte Einschnapp-Verbindung in Relation zueinander unveränderlich gehalten werden, nachdem sie zueinander verstellt worden sind. Ferner sind die Öffnungs-/Schliesseinrichtung 16 und das Adapterelement 34 in Relation zueinander drehstarr verbunden.

Durch ein manuelles Verdrehen des Vorratsbehälters 12 oder des Adapterelements 34, welche drehstarr miteinander verbunden sind, werden lediglich das Adapterelement 34 und der Ausgabestutzen 20 in Relation zueinander verdreht. Da das Adapterelement 34 und der Ausgabestutzen 20 über die Gewindeverbindung miteinander verbunden sind, werden sie durch manuelles Verdrehen in Relation zueinander ebenfalls in vertikaler Richtung verstellt. Dieses Verstellen ist jedoch im Vergleich zu dem zuvor genannten Verschieben in vertikaler Richtung sehr viel feingängiger. Somit kann das Dosiervolumen beispielsweise zunächst durch das vertikale Verschieben der Öffnungs-/Schliesseinrichtung 16 in Relation zum Adapterelement 34 im Wesentlichen grob eingestellt werden und anschliessend durch das Verstellen, bzw. Umdrehen des Adapterelements 34 in Relation zum Ausgabestutzen 20 im Wesentlichen fein eingestellt bzw. justiert werden.

In dem in Figur 4 gezeigten Ausführungsbeispiel ist ein Einschnapp-Element 36 bereitgestellt, welches über eine federnde Verbindung 38 am Hauptkörper der Dosiervorrichtung 10 angebracht ist. Das Einschnapp-Element 36 liegt federnd vorgespannt am Aussenumfang des Adapterelements 34 an und greift in darin eingebrachte Aussparungen 40 ein. Die Aussparungen 40 haben jeweils eine Ausformung, welche im Wesentlichen der Aussenform des Einschnapp-Elements 36 entspricht. Ferner sind die Aussparungen 40 bei einem im Wesentlichen gleichen Winkelabstand entlang des Aussenumfangs des Adapterelements 34 angeordnet. Sobald das Einschnapp-Element 36 federnd in eine der Aussparungen 40 einschnappt, ist das Umdrehen des Adapterelements 34 in Relation zum Ausgabestutzen 20 für den Benutzer spürbar gehemmt. Durch Anlegen eines erhöhten Drehmoments kann die Ineingriffnahme des Einschnapp-Elements 36 mit der Aussparung 40 gelöst werden. Hierdurch kann insgesamt das Adapterelement 34 in Relation zum Ausgabestutzen 20 bei diskreten Winkelabständen umdreht werden. Somit ist eine genauere Justierung des Dosiervolumens gestattet.

Die zuvor beschriebene und in den Figuren gezeigte Dosiervorrichtung 10 kann besonders bevorzugt in einem Kaffeezubereitungsautomaten Anwendung finden. Somit wird ein Kaffeezubereitungsautomat geschaffen, welcher, verglichen mit herkömmlichen Kaffeezubereitungsautomaten, bei welchen insbesondere nur das Kaffeepulver dosiert wird, stets ein frisches Kaffeeprodukt mit einem hohen Aroma ausgibt.

## Patentansprüche

1. Mahlwerk, umfassend eine Dosiervorrichtung (10) zur Dosierung von Mahlgut (28), umfassend:
einen Vorratsbehälter (12) mit einer Einfüllöffnung und einer Auslassöffnung (14);
eine Öffnungs-/Schliesseinrichtung (16), welche an einem Bereich der Auslassöffnung (14) des Vorratsbehälters (12) angeordnet ist, mit einem Schliesskörper (26), welcher eine Rotationsachse hat, welche quer zu einer durch die Öffnungs-/Schliesseinrichtung (16) durchlaufenden Auslassrichtung drehbar angeordnet ist; und
einen Ausgabestutzen (20) mit einer Auslassöffnung (32), wobei der Ausgabestutzen (20) durch einen Hohlkörper gebildet ist und derart mit der Öffnungs-/Schliesseinrichtung (16) in Eingriff steht, dass der Ausgabestutzen (20) und die Öffnungs-/Schliesseinrichtung (16) in Relation zueinander teleskopartig verstellbar sind, **dadurch gekennzeichnet, dass** das Mahlwerk ferner eine der Auslassöffnung (32) von dem Ausgabestutzen (20) unter Berücksichtigung der Schwerkraft nachgeordnete Mahlgut-Zerkleinerungseinrichtung umfasst, die so angeordnet ist, dass durch einen Betriebszustand der Mahlgut-Zerkleinerungseinrichtung die Auslassöffnung (32) verschlossen bzw. geöffnet ist.

2. Mahlwerk nach Anspruch 1,
bei welchem die Öffnungs-/Schliesseinrichtung (16) einen Abschnitt (18) umfasst, welcher zur teleskopartigen Verstellbarkeit mit dem Ausgabestutzen (20) über eine vorzugsweise lösbare Verbindungseinrichtung teleskopartig verstellbar in Eingriff steht, wobei der Abschnitt (18) durch einen Hohlkörper, vorzugsweise einen zylindrischen Hohlkörper, gebildet ist.

3. Mahlwerk nach Anspruch 2,
wobei die Verbindungseinrichtung zumindest einen Hohlkörper aufweist, welcher abschnittsweise zwischen der Öffnungs-/Schliesseinrichtung (16) und dem Ausgabestutzen (20) angeordnet ist.

4. Mahlwerk nach Anspruch 2 oder 3,
bei welchem die Verbindungseinrichtung ein elastisches Reibelement umfasst, welches zwischen wenigstens der Öffnungs-/Schliesseinrichtung (16) und dem Ausgabestutzen (20) angeordnet ist, zum Anlegen einer Reibkraft dazwischen.

5. Mahlwerk nach Anspruch 2 bis 4,
bei welchem die Verbindungseinrichtung wenigstens einen Vorsprung, welcher federbelastet und/oder elastisch ist und an wenigstens der Öffnungs-/Schliesseinrichtung (16) oder dem Ausgabestutzen (20) angeordnet ist, und eine Mehrzahl von korrespondierenden Aussparungen, welche an dem anderen von wenigstens der Öffnungs-/Schliesseinrichtung (16) und dem Ausgabestutzen (20) angeordnet sind, umfasst.

6. Mahlwerk nach Anspruch 5,
bei welchem die Aussparung eine Rille umfasst, welche umlaufend am Innenumfang oder Aussenumfang von wenigstens der Öffnungs-/Schliesseinrichtung (16) oder dem Ausgabestutzen (20) ausgebildet ist.

7. Mahlwerk nach Anspruch 2 oder 3,
bei welchem die Verbindungseinrichtung eine Gewindeverbindung (22,24) umfasst, über welche wenigstens die Öffnungs-/Schliesseinrichtung (16) und der Ausgabestutzen (20) zumindest abschnittsweise miteinander in Eingriff stehen, wobei der Aussenumfang und/oder der Innenumfang von wenigstens der Öffnungs-/Schliesseinrichtung (16) und dem Ausgabestutzen (20) wenigstens abschnittsweise mit einem Aussengewinde (24) und/oder einem Innengewinde (22) bereitgestellt sind.

8. Mahlwerk nach Anspruch 7,
wobei die Öffnungs-/Schliesseinrichtung (16) mit einem elektrisch ansteuerbaren Antrieb ausgestattet ist.

9. Mahlwerk nach Anspruch 2 oder 3,
bei welchem die Verbindungseinrichtung eine Nut/Feder-Verbindung aufweist, über welche wenigstens die Öffnungs-/Schliesseinrichtung (16) und der Ausgabestutzen (20) zumindest abschnittsweise miteinander in Eingriff stehen.

10. Mahlwerk nach Anspruch 9,
bei welchem die Nut/Feder-Verbindung zumindest eine Feder, welche an wenigstens der Öffnungs-/Schliesseinrichtung (16) oder dem Ausgabestutzen (20) gebildet ist, und eine Mehrzahl von korrespondierenden Nuten, welche an dem anderen von wenigstens der Öffnungs-/Schliesseinrichtung (16) und dem Ausgabestutzen (20) gebildet sind, umfasst.

11. Mahlwerk nach Anspruch 10,
bei welchem die Nuten im Wesentlichen entlang der Verschieberichtung von der Öffnungs-/Schliesseinrichtung (16) und dem Ausgabestutzen (20) verlaufen und auf unterschiedlichen Höhen in Formschluss-Arretierungen münden, wobei die Formschluss-Arretierungen vorzugsweise als Nuten ausgebildet sind, welche im Wesentlichen senkrecht zur Verschieberichtung von der Öffnungs-/Schliesseinrichtung (16) und dem Ausgabestutzen (20) verlaufen.

12. Mahlwerk nach einem der Ansprüche 1 bis 11,
bei welchem der Schliesskörper (26) einen zylinderförmigen oder kugelförmigen Körper umfasst, welcher abschnittsweise ausgespart ist, wobei der zylinderförmige oder kugelförmige Körper vorzugsweise derart abschnittsweise ausgespart ist, dass das Mahlgut (28) im geöffneten Zustand des Schliesskörpers (26) durch den ausgesparten Abschnitt überführbar ist und im geschlossenen Zustand des Schliesskörpers (26) durch den nicht ausgesparten Abschnitt abgesperrt ist.

13. Mahlwerk nach einem der Ansprüche 1 bis 12,
ferner umfassend eine Arretiervorrichtung, welche angeordnet ist, die Öffnungs-/Schliesseinrichtung (16) bei geöffnetem Schliesskörper (26) in Relation zum Ausgabestutzen (20) zu arretieren.

14. Mahlwerk nach einem der Ansprüche 1 bis 13,
ferner umfassend einen Deckel zum Abschliessen der Einfüllöffnung von dem Vorratsbehälter (12).

15. Kaffeezubereitungsautomat, umfassend ein Mahlwerk nach einem der Ansprüche 1 bis 14.

## Claims

1. A grinder comprising a dosing device (10) for dosing grinding material (28), comprising:
a storage container (12) having a filling opening and an outlet opening (14);
an opening/closing device (16), which is arranged at a region of the outlet opening (14) of the storage container (12), comprising a closing body (26) which has an axis of rotation which is arranged rotatably transversely to an outlet direction passing through the opening/closing device (16); and
a dispensing nozzle (20) comprising an outlet opening (32), wherein the dispensing nozzle (20) is formed by a hollow body and is in engagement with the opening/closing device (16) such that the dispensing nozzle (20) and the opening/closing device (16) can be adjusted telescopically relative to each other,
**characterized in that** the grinder further comprises a grinding material comminuting device arranged downstream of the outlet opening (32) of the dispensing nozzle (20), as viewed in the direction of gravity, which is arranged such that the outlet opening (32) is closed or opened by means of an operating state of the grinding material comminuting device.

2. The grinder according to claim 1,
in which the opening/closing device (16) comprises a section (18) which, for telescopic adjustability, is telescopically adjustably engaged with the dispensing nozzle (20) via a preferably detachable connecting device, wherein the section (18) being formed by a hollow body, preferably a cylindrical hollow body.

3. The grinder according to claim 2,
wherein the connecting device comprises at least one hollow body which is arranged in sections between the opening/closing device (16) and the dispensing nozzle (20).

4. The grinder according to claim 2 or 3,
in which the connecting device comprises a resilient friction element arranged between at least the opening/closing device (16) and the dispensing nozzle (20) for applying a frictional force therebetween.

5. The grinder according to claims 2 to 4,
in which the connecting device comprises at least one projection which is spring-loaded and/or elastic and is arranged on at least the opening/closing device (16) or the dispensing nozzle (20), and comprises a plurality of corresponding recesses which are arranged on the other one of at least the opening/closing device (16) and the dispensing nozzle (20).

6. The grinder according to claim 5,
in which the recess comprises a groove which is formed circumferentially on the inner circumference or outer circumference of at least the opening/closing device (16) or the dispensing nozzle (20).

7. The grinder according to claim 2 or 3,
in which the connecting device comprises a threaded connection (22, 24), via which at least the opening/closing device (16) and the dispensing nozzle (20) are in engagement with each other at least in sections, wherein the outer circumference and/or the inner circumference of at least the opening/closing device (16) and the dispensing nozzle (20) are provided at least in sections with an external thread (24) and/or an internal thread (22).

8. The grinder according to claim 7,
wherein the opening/closing device (16) is equipped with an electrically controllable drive

9. The grinder according to claim 2 or 3,
in which the connecting device comprises a tongue-and-groove connection, via which at least the opening/closing device (16) and the dispensing nozzle (20) are engaged with each other at least in sections.

10. The grinder according to claim 9,
in which the tongue-and-groove connection comprises at least one tongue formed on at least the opening/closing device (16) or the dispensing nozzle (20) and a plurality of corresponding grooves formed on the other one of at least the opening/closing device (16) and the nozzle (20).

11. The grinder according to claim 10,
in which the grooves extend substantially along the direction of displacement of the opening/closing device (16) and the dispensing nozzle (20) and lead to form fit locking devices at different heights, wherein the form fit locking devices are preferably formed as grooves which extend substantially perpendicular to the direction of displacement of the opening/closing device (16) and the dispensing nozzle (20).

12. The grinder according to one of claims 1 to 11,
in which the closing body (26) comprises a cylindrical or spherical body, which is recessed in sections, wherein the cylindrical or spherical body is preferably recessed in sections such that the grinding material (28) can be transferred through the recessed section in an open state of the closing body (26) and is blocked by the non-recessed section in a closed state of the closing body (26).

13. The grinder according to one of claims 1 to 12,
further comprising a locking device which is arranged to lock the opening/closing device (16) in relation to the dispensing nozzle (20) in an open state of the closing body (26).

14. The grinder according to one of claims 1 to 13,
further comprising a lid for closing the filling opening of the storage container (12).

15. An automatic coffee maker comprising a grinder according to one of claims 1 to 14.

## Revendications

1. Broyeur comprenant un dispositif de dosage (10) pour doser le produit broyé (28) comprenant :
- un réservoir de stockage (12) avec une ouverture de remplissage et une ouverture de sortie (14) ;
- un dispositif d'ouverture/fermeture (16) agencé au niveau d'une zone de l'ouverture de sortie (14) du réservoir de stockage (12), présentant un corps de fermeture (26) qui a un axe de rotation, lequel axe de rotation étant agencé perpendiculairement à une direction de sortie traversant le dispositif d'ouverture/fermeture (16) ; et
- un manchon de distribution (20) avec une ouverture de sortie (32), le manchon de distribution (20) étant formé par un corps creux et étant en prise avec le dispositif d'ouverture/fermeture (16) de telle façon que le manchon de distribution (20) et le dispositif d'ouverture/fermeture (16) sont réglables de façon télescopique l'un par rapport à l'autre,
**caractérisé en ce que** le broyeur comprend en outre un dispositif de concassage agencé en aval de l'ouverture de sortie (32) du manchon de distribution (20) en tenant compte de la gravité et qui est agencé de telle sorte que l'état de fonctionnement du dispositif de concassage ouvre ou ferme l'ouverture de sortie (32).

2. Broyeur selon la revendication 1, dans lequel le dispositif d'ouverture/fermeture (16) comprend une section (18) qui est en prise de façon télescopique avec le manchon de distribution (20) par le biais d'un dispositif de raccordement de préférence amovible, en vue d'un réglage télescopique avec le manchon de distribution (20), la section (18) étant formée par un corps creux, de préférence un corps creux cylindrique.

3. Broyeur selon la revendication 2, dans lequel le dispositif de raccordement présente au moins un corps creux qui est agencé par endroits entre le dispositif d'ouverture/fermeture (16) et le manchon de distribution (20).

4. Broyeur selon la revendication 2 ou 3, dans lequel le dispositif de raccordement comprend un élément de frottement élastique qui est agencé entre au moins le dispositif d'ouverture/fermeture (16) et le manchon de distribution (20) pour appliquer une force de frottement entre les deux.

5. Broyeur selon les revendications 2 à 4, dans lequel le dispositif de raccordement comprend au moins une saillie qui est montée à ressort et/ou élastique et qui est agencée au niveau d'au moins le dispositif d'ouverture/fermeture (16) ou du manchon de distribution (20), et une pluralité d'évidements correspondants qui sont agencés de façon correspondante sur l'autre dispositif d'ouverture/fermeture (16) ou manchon de distribution (20).

6. Broyeur selon la revendication 5, dans lequel l'évidement comprend une rainure qui est réalisée périphérique sur le pourtour intérieur ou le pourtour extérieur du dispositif d'ouverture/fermeture (16) ou du manchon de distribution (20).

7. Broyeur selon la revendication 2 ou 3, dans lequel le dispositif de raccordement comprend une liaison filetée (22, 24) qui permet de mettre en prise au moins par endroits le dispositif d'ouverture/fermeture (16) et le manchon de distribution (20), le pourtour extérieur et/ou le pourtour intérieur d'au moins le dispositif d'ouverture/fermeture (16) et du manchon de distribution (20) étant muni au moins par endroits d'un filetage extérieur (24) et/ou d'un filetage intérieur (22).

8. Broyeur selon la revendication 7, dans lequel le dispositif d'ouverture/fermeture (16) est équipé d'une commande électrique.

9. Broyeur selon la revendication 2 ou 3, dans lequel le dispositif de raccordement présente un raccordement rainure/ressort qui permet de mettre en prise au moins par endroits le dispositif d'ouverture/fermeture (16) et le manchon de distribution (20).

10. Broyeur selon la revendication 9, dans lequel le raccordement rainure/ressort comprend au moins un ressort qui est formé au niveau d'au moins le dispositif d'ouverture/fermeture (16) ou sur le manchon de distribution (20), et une pluralité de rainures correspondantes qui sont formées en correspondance sur l'autre dispositif d'ouverture/fermeture (16) et sur le manchon de distribution (20).

11. Broyeur selon la revendication 10, dans lequel les rainures s'étendent essentiellement le long du sens coulissement du dispositif d'ouverture/fermeture (16) et du manchon de distribution (20) et débouchent à différentes hauteurs sur des arrêts par correspondance de forme, les arrêts par correspondance de forme étant réalisés de préférence sous la forme de rainures qui s'étendent essentiellement perpendiculairement au sens de coulissement du dispositif d'ouverture/fermeture (16) et du manchon de distribution (20).

12. Broyeur selon l'une des revendications 1 à 11, dans lequel le corps de fermeture (26) comprend un corps de forme cylindrique ou de forme sphérique qui est évidé par endroits, dans lequel le corps cylindrique ou sphérique est évidé par endroits de telle sorte que le produit broyé (28), à l'état ouvert du corps de fermeture (26), peut être transporté par la section évidée et, à l'état fermé du corps de fermeture (26), est bloqué par la section non évidée.

13. Broyeur selon l'une des revendications 1 à 12, comprenant en outre un dispositif de blocage qui est agencé pour bloquer le dispositif d'ouverture/fermeture (16) lorsque le corps de fermeture (26) est ouvert par rapport au manchon de distribution (20).

14. Broyeur selon l'une des revendications 1 à 13, comprenant en outre un couvercle pour fermer l'ouverture de remplissage du réservoir de stockage (12).

15. Automate pour la préparation de café comprenant un broyeur selon l'une des revendications 1 à 14.
